# EUROPÄISCHE PATENTSCHRIFT

(11) **EP 2 788 210 B1**
(45) Veröffentlichungstag und Bekanntmachung des Hinweises auf die Patenterteilung: **23.03.2016**
(21) Anmeldenummer: 12809110.5
(22) Anmeldetag: 04.12.2012
(51) Int. Cl.: B60J 5/04

(54) **TRÄGERBAUTEIL FÜR EINEN KRAFTFAHRZEUG-FENSTERHEBER MIT VERSTEIFUNGSSTRUKTUR**
SUPPORT COMPONENT FOR A MOTOR VEHICLE WINDOW LIFTER HAVING A REINFORCING STRUCTURE
ELÉMENT DE SUPPORT POUR UN LÈVE-GLACE POUR VÉHICULE AUTOMOBILE AVEC STRUCTURE DE RENFORCEMENT

(30) Priorität: 09.12.2011 DE 102011056233
(43) Veröffentlichungstag der Anmeldung: 15.10.2014
(73) Patentinhaber: Brose Fahrzeugteile GmbH & Co. Kommanditgesellschaft, Hallstadt, 96103 Hallstadt (DE)
(72) Erfinder: WEBER, Horst, 95339 Wirsberg (DE); WOLF, Heike, 96050 Bamberg (DE); MÜLLER, Kai, 96145 Sesslach (DE); PLEISS, Eberhard, 74193 Schwaigern (DE)
(74) Vertreter: Maikowski & Ninnemann
(86) Internationale Anmeldenummer: PCT/EP2012/005000
(87) Internationale Veröffentlichungsnummer: WO 2013/083265

(56) Entgegenhaltungen:
- WO-A1-2012/162810
- WO-A2-2010/135562

## Beschreibung

Die vorliegende Erfindung betrifft ein Trägerbauteil für ein Kraftfahrzeug nach dem Oberbegriff des Anspruchs 1.

Ein derartiges Trägerbauteil ist aus der WO 2010/135562 A2 bekannt. Es erstreckt sich flächig entlang einer Trägerebene und ist zum Tragen von Funktionskomponenten eines Kraftfahrzeug-Fensterhebers, wie zum Beispiel einer Führungsschiene und/oder einem Antriebsmotor für die Verstellung der Fensterscheibe, ausgebildet und vorgesehen. Beispielsweise handelt es sich um einen sogenannten Aggregateträger, der in einer Kraftfahrzeugtür eingesetzt ist. Das flächige Trägerbauteil definiert zwei einander gegenüberliegende Seitenflächen zur Anordnung der Funktionskomponenten, von denen im Fall eines Aggregateträgers die eine einer Türaußenhaut und die andere dem Fahrzeuginnenraum zugewandt ist, wenn der Aggregateträger bestimmungsgemäß in der Kraftfahrzeugtür montiert ist.

Ein derartiges flächiges Trägerbauteil weist üblicherweise bezogen auf seine Ausdehnung entlang der Trägerebene eine vergleichsweise geringe Dicke auf, so dass das Trägerbauteil regelmäßig eine Versteifungsstruktur oder mehrere Versteifungsstrukturen aufweist, um das Trägerbauteil zu versteifen und insbesondere biege- und torsionssteifer auszulegen. Hierzu ist es bekannt, zum Beispiel Rippen oder Sicken als Versteifungsstrukturen an dem Trägerbauteil vorzusehen.

Dabei werden zur großflächigen Aussteifung vorzugsweise Sicken eingesetzt, da diese durch das sich bildende Profil eine größere Widerstandsmomentenerhöhung mit sich bringen. Zur örtlichen Aussteifung wiederum werden bevorzugt Rippen eingesetzt, da diese im Vergleich zu Sicken eine geringere Widerstandsmomentenerhöhung zur Folge haben.

Aus Bauraumgründen ist nun oftmals erforderlich, dass an einer Seitenfläche zueinander in ihrer Höhe versetzte Flächensegmente vorgesehen werden müssen, die die Seitenfläche bilden. Derartige Flächensegmente sind örtlich begrenzt und zur gezielten Aussteifung des Trägerbauteils ungeeignet. Erstreckt sich aber eine Versteifungsstruktur über zwei in ihrer Höhe zueinander versetzte Flächensegmente, kann es vorkommen, dass die sich an einer Seitenfläche als Sicke und an der anderen Seitenfläche als reliefartig vorstehende, längserstreckte Erhebung darstellende Versteifungsstruktur keine oder nicht die gewünschte Versteifungswirkung hat. Dabei erstreckt sich wenigstens ein Flächensegment zu einem anderen Flächensegment in unterschiedlicher Höhe bezogen auf die von dem Trägerbauteil aufgespannte Trägerebene an der jeweiligen Seitenfläche. Durch den Wechsel der Versteifungsstruktur entlang ihrer Längserstreckungsrichtung von dem einen (z.B. tiefer liegenden) Flächensegment auf das andere (höher liegende) Flächensegment kann beispielsweise bei einer Sicke der Fall gegeben sein, dass die Sicke an dem höheren Flächensegment nicht fortgeführt werden kann, ohne dass hierdurch die Steifigkeit am Übergang zwischen den beiden Flächensegmenten zusätzlich verringert wird. Regelmäßig steht daher an dem in Bezug auf seine Höhe versetzt liegenden Flächensegment nur noch die Wanddicke des Trägerbauteils zur Verfügung.

Beispielsweise kann auf einer ersten Seitenfläche ein erstes Flächensegment stärker erhaben bezogen auf die Trägerebene hervorstehen als ein daran angrenzendes zweites Flächensegment, wobei sich über beide Flächensegmente eine reliefartig hervorstehende Versteifungsstruktur erstreckt. Auf der gegenüberliegenden zweiten Seitenfläche stellt sich diese Versteifungsstruktur als Sicke dar, die von dem hier, d.h., an der zweiten Seitenfläche, tiefer bzw. zurückgesetzt liegenden ersten Flächensegment zu dem auf der zweiten Seitenfläche sich erhaben(er) darstellenden zweiten Flächensegment als kanalartige Vertiefung verläuft. Das zweite Flächensegment kann nun aber auf der zweiten Seitenfläche gegenüber dem ersten Flächensegment soweit erhöht liegen, dass die längserstreckte Vertiefung hierdurch ausläuft und unmittelbar in das zweite Flächensegment hinein mündet. Im Bereich des zweiten Flächensegments ist somit keine effektive Versteifung mehr durch die Versteifungsstruktur gegeben.

Ausgehend von dieser Problematik liegt der vorliegenden Erfindung die Aufgabe zugrunde, ein Trägerbauteil für einen Kraftfahrzeugfensterheber weiter zu verbessern und insbesondere die zuvor genannten Nachteile zu minimieren.

Diese Aufgabe wird mit dem Trägerbauteil des Anspruchs 1 gelöst.

Dieses Trägerbauteil zeichnet sich durch eine Versteifungsstruktur aus, die sich an beiden einander gegenüberliegenden Seitenflächen des flächigen Trägerbauteils zumindest teilweise über zwei - gegebenenfalls hintereinander und zueinander versetzt angeordnete - Flächensegmente erstreckt und dabei derart ausgebildet ist, dass die Versteifungsstruktur an der einen Seitenfläche gegenüber beiden Flächensegmenten quer zur Trägerebene hervorstehend verläuft und an der anderen Seitenfläche gegenüber dem einem Flächensegment zurückgesetzt und gegenüber dem anderen Flächensegment hervorstehend verläuft.

Auf diese Weise wird sichergestellt, dass die Versteifungsstruktur auch bei zueinander versetzt liegenden Flächensegmenten mit Versteifungswirkung fortgeführt wird und die auf der anderen Seitenfläche zunächst zurückgesetzt - zum Beispiel als Sicke - ausgebildete Versteifungsstruktur nicht ersatzlos in ein höher gelegenes bzw. gegenüber dem anderen Flächensegment erhabenes Flächensegment mündet. So wird es beispielsweise bevorzugt, die Versteifungsstruktur mit einer Kombination von Sicke und mindestens einer Versteifungsrippe auszubilden. Dabei kann sich die Versteifungsrippe insbesondere als Verlängerung einer Seitenwand der Sicke an die Sicke entlang einer Längserstreckungsrichtung anschließen und dünnwandig ausgebildet im Wesentlichen senkrecht zur Trägerebene an der jeweiligen Seitenfläche vorstehen.

Bei quer zu der von dem Trägerbauteil aufgespannten Trägerebene zueinander versetzt angeordneten Flächensegmenten liegt mindestens ein (erstes) Flächensegment gegenüber mindestens einem anderen (zweiten) Flächensegment bezogen auf die Trägerebene zurückgesetzt vor, das heißt, das andere (zweite) Flächensegment liegt an einer Seitenfläche tiefer als das eine (erste) Flächensegment vor bzw. das eine (erste) Flächensegment verläuft gegenüber dem anderen (zweiten) Flächensegment wenigstens geringfügig erhöht oder ist hierzu erhaben.

Es ist aber für Nutzung der Vorteile der erfindungsgemäßen Lösung nicht zwingend, dass sich die Versteifungsstruktur an beiden Seitenflächen zumindest teilweise über zwei in der Erstreckungsrichtung der Versteifungsstruktur hintereinander und zueinander versetzt angeordnete Flächensegmente erstreckt. Vielmehr kann auch vorgesehen sein, dass die beiden Flächensegmente im Wesentlichen in einer gemeinsamen Ebene, z.B. der Trägerebene, verlaufen.

In einer bevorzugten Ausführungsvariante ändert sich die Ausdehnung der Versteifungsstruktur entlang ihrer Erstreckungsrichtung - vorzugsweise kontinuierlich - quer zu der von dem Trägerbauteil aufgespannten Trägerebene. So kann die Versteifungsstruktur an einer oder beiden Seitenflächen in zumindest einem Abschnitt rampenartig verlaufen.

Hierbei wird in einer vorteilhaften Weiterbildung vorgesehen, dass die sich die Ausdehnung der Versteifungsstruktur quer zur Trägerebene und entlang der Erstreckungsrichtung an beiden Seitenflächen in übereinstimmenden Maße ändert, so dass eine Ausdehnung der Versteifungsstruktur quer zur Trägerebene an der einen Seitenfläche in dem Maße ab- oder zunimmt wie auch die Ausdehnung der Versteifungsstruktur quer zu der Trägerebene an der anderen Seitenfläche ab- oder zunimmt. In einem hierauf basierenden Ausführungsbeispiel verläuft die Versteifungsstruktur an der einen Seitenfläche zum Beispiel als kanalartige und rampenartige Vertiefung, also zum Beispiel als Sicke mit kontinuierlich abnehmender Tiefe, während die Versteifungsstruktur an der gegenüberliegenden Seitenfläche entlang einer Längserstreckungsrichtung (durchgängig) reliefartig und/oder keilförmig hervorsteht, so dass sie hier gleichermaßen einen rampenartig verlaufenden Abschnitt aufweist.

An dem als Sicke ausgebildeten Abschnitt der Versteifungsstruktur schließt sich an derselben Seitenfläche dann zum Beispiel in Längserstreckungsrichtung der Versteifungsstruktur mindestens eine Versteifungsrippe oder ein Paar von Versteifungsrippen an. Hierdurch verläuft die Versteifungsstruktur bei dem sich in Längserstreckungsrichtung anschließenden (zweiten) Flächensegment, das gegenüber einem (ersten) Flächensegment an der einen Seitenfläche erhaben bzw. erhöht ist, hervorstehend und wirkt auch in diesem Bereich des Trägerbauteils versteifend. Die Versteifungsstruktur geht somit an einer Seitenfläche von einem durch eine Vertiefung gebildeten Abschnitt in einen vorspringenden Abschnitt über, um das Trägerbauteil auch an zueinander versetzt liegende Flächensegmente der Seitenfläche effektiv zu versteifen.

Beispielsweise kann eine abnehmende Ausdehnung der Versteifungsstruktur quer zur Trägerebene an der einen Seitenfläche durch eine zunehmende Ausdehnung die Versteifungsstruktur quer zur Trägerebene und/oder quer zur Erstreckungsrichtung (und entlang der Trägerebene) an der anderen Seitenfläche kompensiert sein. In diesem Zusammenhang kann beispielsweise vorgesehen sein, dass die Versteifungsstruktur eine entlang ihrer Erstreckungsrichtung im Wesentlichen konstant bleibende Gesamthöhe senkrecht zur Trägerebene aufweist und so ausgebildet ist, dass sie entlang ihrer Erstreckungsrichtung in unterschiedlich starkem Maße von den beiden Seitenflächen hervorsteht, um eine im Wesentlichen konstante versteifende Wirkung entlang ihrer Erstreckungsrichtung zu erzielen.

In Anlehnung an das zuvor erwähnte Ausführungsbeispiel kann beispielsweise auch die Höhe und/oder die Breite einer Verstärkungsrippe auf der einer Seitenfläche vergrößert sein, wenn die Höhe des auf der anderen Seitenfläche vorstehenden und der Verstärkungsrippe gegenüberliegenden Abschnitts der Versteifungsstruktur verringert ist. Dabei erfolgt die Vergrößerung der Breite und/oder der Höhe der Verstärkungsrippe entlang der Erstreckungsrichtung auf der einen Seitenfläche tendenziell in dem Maße, wie die Ausdehnung auf der anderen Seitenfläche entlang der Erstreckungsrichtung abnimmt, um eine im Wesentlichen konstante versteifende Wirkung der Versteifungsstruktur entlang ihrer Erstreckungsrichtung zu erzielen.

Bevorzugt verläuft die Versteifungsstruktur an beiden durch das Trägerbauteil definierten Seitenflächen von einem Randbereich des Trägerbauteils aus in Richtung auf einen mittigen oder zentralen Abschnitt des Trägerbauteils. So kann es sich bei dem mittigen oder zentralen Abschnitt des Trägerbauteils beispielsweise um eine Lagerfläche des Trägerbauteils handeln, die dafür ausgebildet und vorgesehen ist, dass an dieser eine Antriebseinheit des Kraftfahrzeugfensterhebers mit einem Antriebsmotor fixiert wird.

In einem Ausführungsbeispiel sind die beiden Flächensegmente, die von ein und derselben Versteifungsstruktur an den beiden sich gegenüberliegenden Seitenflächen des Trägerbauteils versteift sind, über wenigstens ein weiteres, drittes Flächensegment miteinander verbunden, über das sich die Versteifungsstruktur hinweg erstreckt. Dieses dritte Flächensegment verbindet die beiden - gegebenenfalls zueinander quer zur Trägerebene versetzt liegenden - ersten und zweiten Flächensegmente miteinander und verläuft beispielsweise wenigstens abschnittsweise oder vollständig geneigt zu den beiden hierüber verbundenen Flächensegmenten und/oder zu der Trägerebene des Trägerbauteils.

Durch die sich an zwei zueinander versetzt liegenden Flächensegmente in der erfindungsgemäßen Art und Weise zumindest teilweise erstreckende Versteifungsstruktur wird eine durchgehende Versteifungswirkung erreicht, auch wenn die zwei an einander angrenzenden oder zumindest entlang der Längserstreckungsrichtung der Versteifungsstruktur hintereinander liegenden Flächensegmente in unterschiedlich starkem Maße an einer Seitenfläche des Trägerbauteils hervorstehen oder zurückgesetzt ausgebildet sind. Auch werden Soll-Biegestellen in den Bereichen vermieden, an denen ein Übergang von dem einem Flächensegment auf das andere, höher oder tiefer gelegene Flächensegment erfolgt, da die Versteifungsstruktur gezielt entlang ihrer Erstreckungsrichtung fortgeführt ist.

Darüber hinaus kann auch ein Bauraumgewinn erzielt werden, da etwaige Versteifungsmaßnahmen an Engstellen an einer Seitenfläche durch die Versteifungsstruktur auf der der Engstelle abgewandten anderen Seitenfläche an demselben Flächensegment realisiert werden. Steht zum Beispiel an der einen Seitenfläche bei dem einen Flächensegment kein ausreichender Bauraum für eine erhaben vorstehende Versteifungsstruktur zur Verfügung, wird durch die erfindungsgemäße Ausbildung des Trägerbauteils sichergestellt, dass an der gegenüberliegenden Seitenfläche die Versteifungsstruktur fortgeführt wird und die Versteifungsstruktur nunmehr an der anderen, gegenüberliegenden Seitenfläche im weiteren Verlauf zur Erzielung einer Versteifungswirkung erhaben hervorsteht und z. B. als Versteifungsrippe fortgeführt wird.

Weitere Merkmale und Vorteile der vorliegenden Erfindung werden bei der nachfolgenden Beschreibung eines Ausführungsbeispiels anhand der Figuren deutlich werden.

Es zeigen:
- Figuren 1A-1B: ein Ausführungsbeispiel eines erfindungsgemäßen Trägerbauteils in unterschiedlichen Seitenansichten;
- Figuren 2A-2C: unterschiedliche perspektivische und vergrößerte Ansichten des Trägerbauteils mit Blick auf eine Versteifungsstruktur an einer ersten Seitenfläche des Trägerbauteils;
- Figuren 3, 4 und 5: ausschnittsweise unterschiedliche Schnittansichten des Trägerbauteils gemäß den in der Figur 2A eingezeichneten Schnittlinien III, IV und V;
- Figuren 6A-6C: verschiedene perspektivische und vergrößerte Ansichten des Trägerbauteils mit der Versteifungsstruktur der Figuren 2A bis 2C mit _ Blick auf eine der ersten Seitenfläche gegenüberliegende zweiten Seitenfläche des Trägerbauteils.

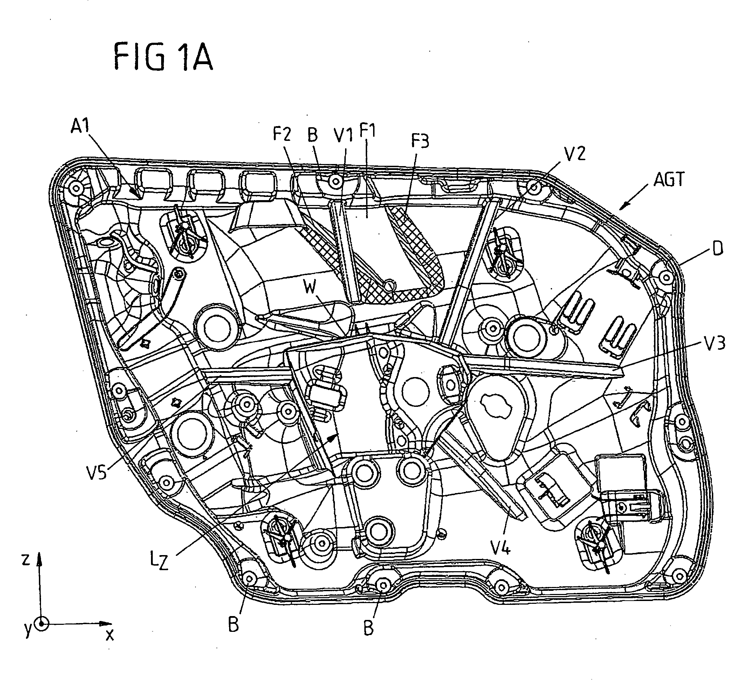

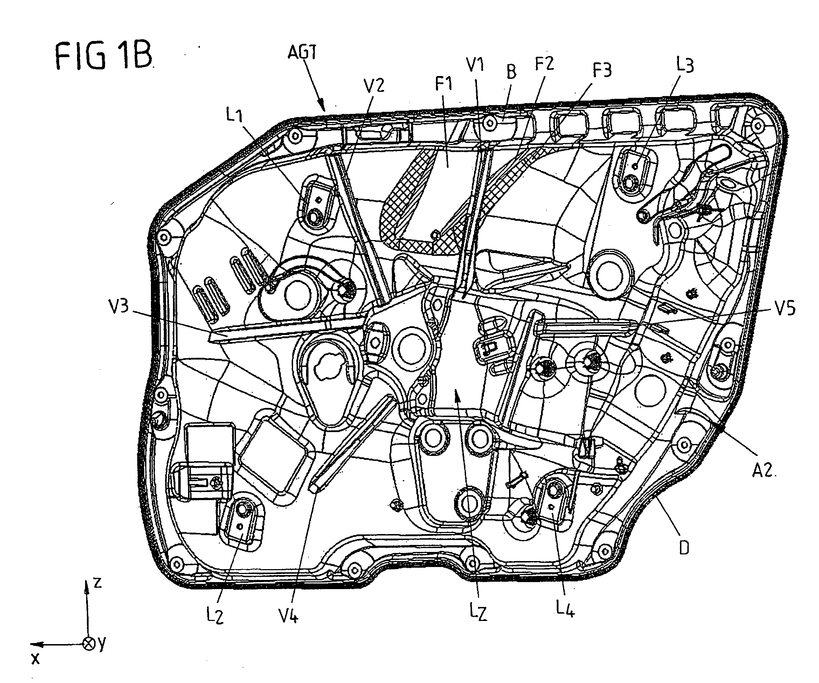

Die Figur 1A zeigt ein flächig ausgebildetes Trägerbauteil in Form eines Aggregateträgers AGT in Seitenansicht mit Blick auf eine erste Seitenfläche 1A des Aggregateträgers. An dem Aggregateträger können an dafür vorgesehenen Lagerflächen L₁ bis L₄ (vergleiche auch Figur 1 B) Funktionskomponenten eines Kraftfahrzeugfensterhebers angeordnet und fixiert werden.

Der Aggregateträger AGT dient ferner dem dichtenden Verschließen eines Hohlraums innerhalb einer Kraftfahrzeugtür, so dass in der Kraftfahrzeugtür ein zwischen einer Türaußenseite und dem Aggregateträger AGT vorliegender Nassraum gegenüber einem in Richtung des Fahrzeuginnenraums liegender Trockenraum der Fahrzeugtür abgedichtet ist. An seinem Rand weist der Aggregateträger AGT daher eine umlaufende Dichtung D auf, über die der Aggregateträger AGT dichtend an einer Türinnenhaut anbringbar ist, um innerhalb der Kraftfahrzeugtür einen Nassraum von einem Trockenraum zu trennen. In randnahen Bereichen des Aggregateträgers AGT sind mehrere Befestigungsstellen B vorgesehen, an denen der Aggregateträger AGT an der Türinnenhaut fixiert werden kann.

Der Aggregateträger AGT erstreckt sich vorliegend flächig im Wesentlichen entlang einer Trägerebene, die in den Raumrichtungen x und z von dem Aggregateträger AGT aufgespannt wird. Die mit der xz-Ebene übereinstimmende Trägerebene stellt somit eine Bezugsebene dar, gegenüber der an dem Aggregateträger AGT ausgebildete Bereiche hervorstehen oder zurückgesetzt sein können.

Der Aggregateträger AGT ist aus einem vergleichsweise dünnwandigen Material hergestellt und zur Versteifung mit mehreren Versteifungsstrukturen V1 bis V5 versehen. An der aus der Figur 1A ersichtlichen ersten Seitenfläche A1 des Aggregateträgers AGT, die im montierten Zustand des Aggregateträgers AGT in einem Kraftfahrzeug dem Fahrzeuginnenraum zugewandt ist, stehen die einzelnen Versteifungsstrukturen V1 bis V5 bezogen auf die von dem Aggregateträger AGT aufgespannte Trägerebene (xz-Ebene) reliefartig erhaben hervor. Die einzelnen Versteifungsstrukturen V1 bis V5 sind dabei weiterhin jeweils längserstreckt ausgebildet und erstrecken sich jeweils von einem Randbereich des Aggregateträgers AGT auf eine zentrale Lagerfläche L_{z} des Aggregateträgers AGT zu. An dieser zentralen Lagerfläche L_{z} ist eine Antriebseinheit mit einem Antriebsmotor für den Kraftfahrzeugfensterheber bestimmungsgemäß lagerbar und fixierbar. Die Versteifungsstrukturen V1 bis V5 verlaufen somit strahlenförmig von einem Randbereich des Aggregateträgers AGT auf diese zentrale Lagerfläche L_{z} zu.

Einzelne der längserstreckt ausgebildeten Versteifungsstrukturen V1 bis V5 erstrecken sich vorliegend teilweise oder vollständig über mehrere aneinander angrenzende Flächensegmente an der ersten Seitenfläche A1 hinweg, so dass die Versteifungsstrukturen V1 bis V5 im Bereich dieser Flächensegmente des Aggregateträgers AGT ein Widerstandsmoment des Aggregateträgers AGT - gegen Biegung und Torsion - erhöhen. Dabei können aneinander angrenzende Flächensegmente an der ersten Seitenfläche A1 auf unterschiedlichen Höhenniveaus bezogen auf die Trägerebene vorliegen. Einzelne einander angrenzende Flächensegmente des Aggregateträgers AGT liegen somit höher bzw. tiefer an der ersten Seitenfläche A1 vor bzw. liegen gegenüber einem angrenzenden Flächensegment zurückgesetzt oder erhaben.

So liegen beispielsweise Flächensegmente F1 bis F4 des Aggregateträgers AGT entlang einer Richtung in der Trägerebene (xz-Ebene) hintereinander und wenigstens teilweise quer zu der Trägerebene zueinander versetzt. Vorliegend liegt beispielsweise das mit F3 bezeichnete Flächensegment gegenüber einem ebenen Flächensegment F1 an der ersten Seitenfläche A1 zurückgesetzt bzw. vertieft und umrandet das (erste) Flächensegment F1 U-förmig. Abschnittsweise sind die beiden Flächensegmente F1 und F3 über ein geneigt zu beiden Flächensegmenten F1 und F3 und geneigt zu der Trägerebene verlaufendes Flächensegment F2 miteinander verbunden.

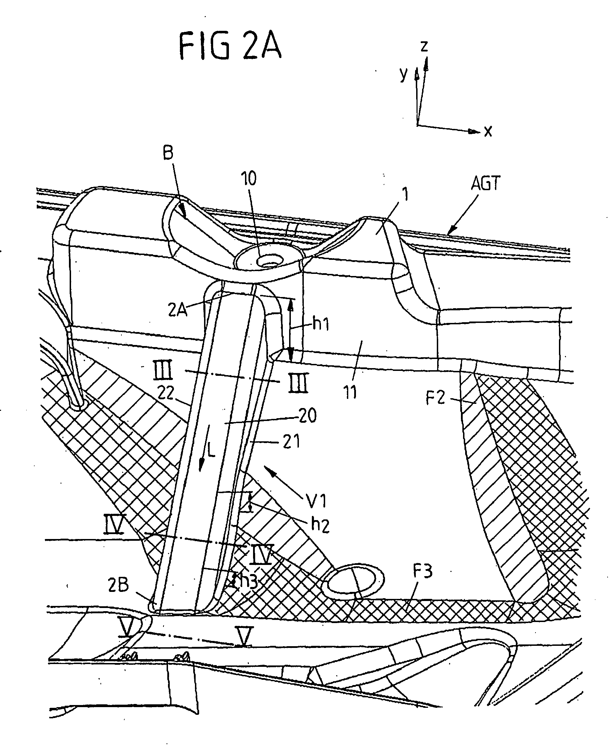

An der ersten Seitenfläche A1 erstreckt sich die eine Befestigungsstruktur V1 ausgehend von einer Befestigungsstelle B in Richtung auf die zentrale Lagerfläche L_{z} über Abschnitte aller drei Flächensegment F1, F2 und F3 hinweg. Die Versteifungsstruktur V1 verläuft dabei rampenförmig ausgehend von der an dem Randbereich des Aggregateträgers AGT ausgebildeten Befestigungsstelle B, so dass sich die Versteifungsstruktur V1 vorwiegend entlang ihrer (Längs-) Erstreckungsrichtung L auf die zentrale Lagerfläche L_{z} zu quer zur Trägerebene verjüngt. Die Ausdehnung der an der ersten Seitenfläche A1 vorstehenden Versteifungsstruktur V1 nimmt somit ihrer entlang ihrer Längserstreckungsrichtung ab. Dies spiegelt sich auch in einer kontinuierlich abnehmende Höhe der Versteifungsstruktur V1 entlang ihrer Längserstreckungsrichtung L an der ersten Seitenfläche A1 bezogen auf das jeweils angrenzenden Flächensegment F1, F2 oder F3 wider, wie dies in der Figur 2A mit den Höhen h₁, h₂ und h₃ (h₁>h₂>h₃) in vergrößerter Ansicht illustriert ist.

In der Figur 1B ist der Aggregateträger AGT mit Blick auf eine zweite Seitenfläche A2 dargestellt, die der ersten Seitenfläche A1 der Figur 1A gegenüberliegt und die im montierten Zustand des Aggregateträgers AGT der Türaußenhaut und dem Nassraum zugewandt ist. An der zweiten Seitenfläche A2 sind Führungsschienen des Kraftfahrzeugfensterhebers jeweils im Bereich eines Paares von Lagerflächen L₁, L₂ oder L₃, L₄ festlegbar.

Die Versteifungsstruktur V1 erstreckt sich an der zweiten Seitenfläche A2 ausgehend von der Befestigungsstelle B als kanalartige Vertiefung über Abschnitt der drei Flächensegmente F1 bis F3 hinweg. Auf der zweiten Seitenfläche A2 stellt sich die Versteifungsstruktur V1 somit als Sicke in dem Aggregateträger AGT dar, die ausgehend von dem ersten Flächensegment F1 entlang ihrer Längserstreckungsrichtung L verläuft. Die Sicke der Versteifungsstruktur V1 auf der zweiten Seitenfläche A2 verläuft dabei entlang ihrer Längserstreckungsrichtung L gleichermaßen rampenartig, so dass die Tiefe der Sicke im Verlauf der Versteifungsstruktur V1 auf die zentrale Lagerfläche L_{z} zu abnimmt.

Bei bisher bekannten Versteifungsstrukturen hätte dieser Verlauf aber zur Folge, dass im Bereich des dritten Flächensegments F3, an dem die Sicke endet, auch die Versteifungsstruktur V1 enden würde, da dieses Flächensegment F3 an der zweiten Seitenfläche A2 soweit gegenüber dem ersten Flächensegment F1 erhöht liegt bzw. erhaben vorliegt, dass die Sicke nicht mehr (den Aggregateträger AGT versteifend) fortgeführt werden kann. Das Flächensegment F3 sowie ein sich daran in Längserstreckungsrichtung L der Versteifungsstruktur V1 anschließendes Flächensegment F4 wäre dementsprechend durch die Versteifungsstruktur nicht mehr versteift. Vielmehr wäre im Übergangsbereich zwischen den Flächensegmenten F3 und F4, in dem die Versteifungsstruktur endet, eine unerwünschte Biegestelle in den Aggregateträger AGT eingebracht. Der dünnwandige Aggregateträger AGT könnte somit unter Umständen bei einer Biege- und/oder Torsionsbeanspruchung genau in diesem Übergangsbereich versagen.

Um einer derartigen unvorteilhaften Ausgestaltung einer Versteifungsstruktur entgegenzuwirken, ist die Versteifungsstruktur V1 an der zweiten Seitenfläche A2 erfindungsgemäß fortgeführt und zwar derart, dass sie im weiteren Verlauf entlang ihrer Längserstreckungsrichtung L an der zweiten Seitenfläche A2 hervorstehend verläuft - hier in Form eines Paares von zueinander parallelen Versteifungsrippen 23, 24. Die Versteifungsstruktur V1 geht somit an der zweiten Seitenfläche A2 entlang ihrer Längserstreckungsrichtung L von einem zurückgesetzten Abschnitt in einen erhaben vorstehenden Abschnitt über.

Dies wird vor allem in der Zusammenschau der Figuren 2A bis 2C, 3 bis 5 und 6A bis 6C verdeutlicht.

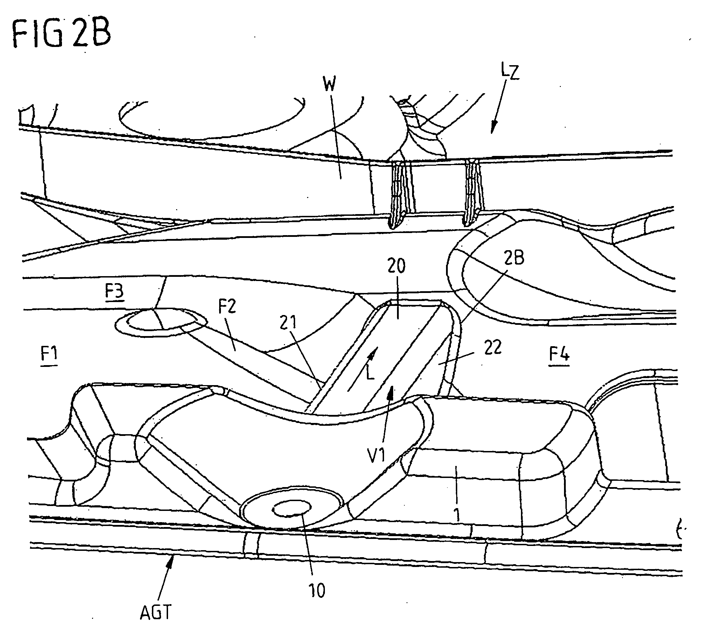

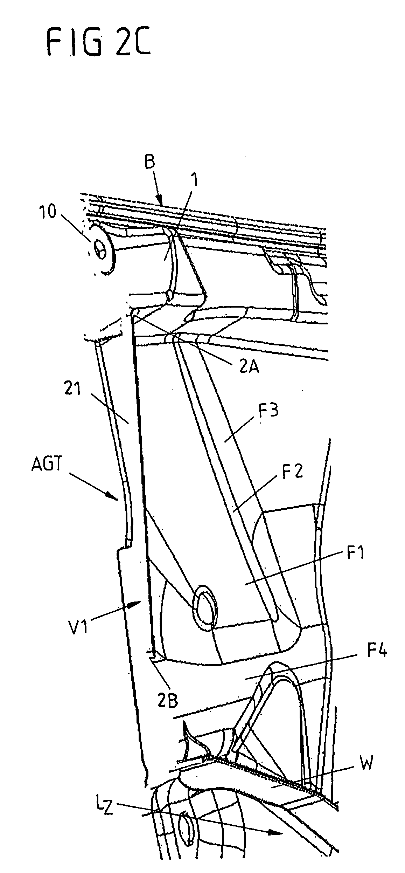

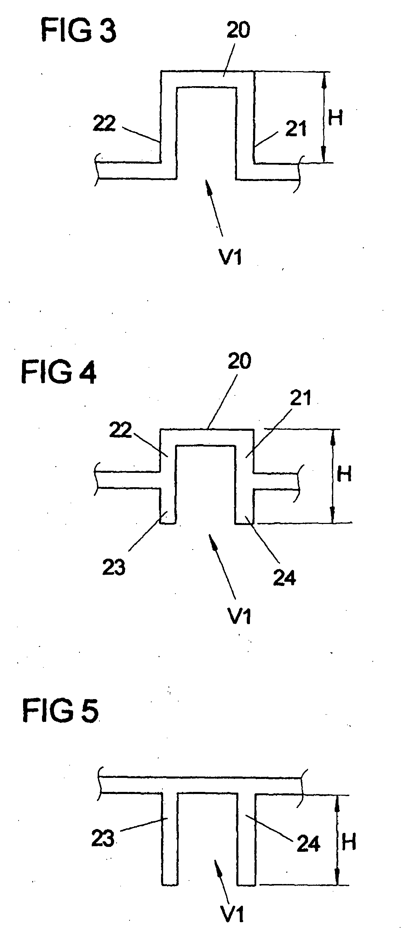

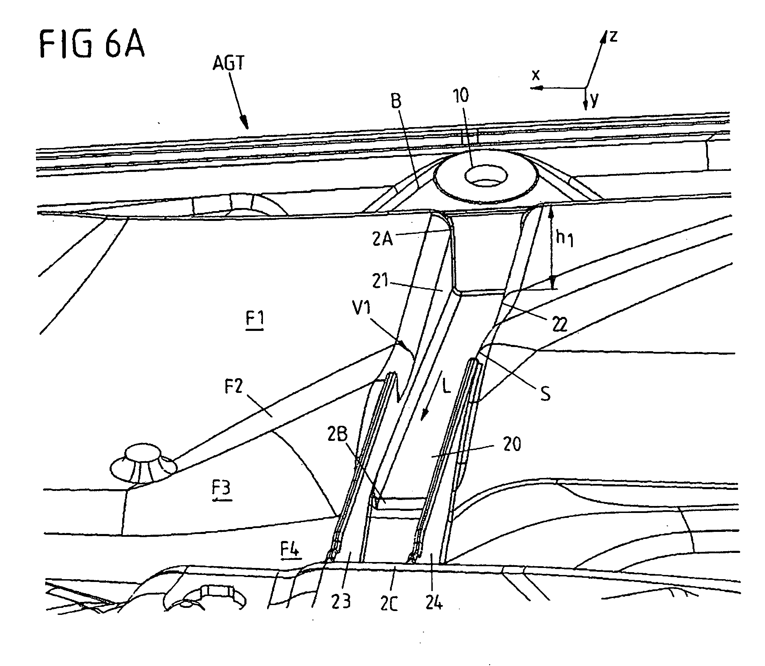

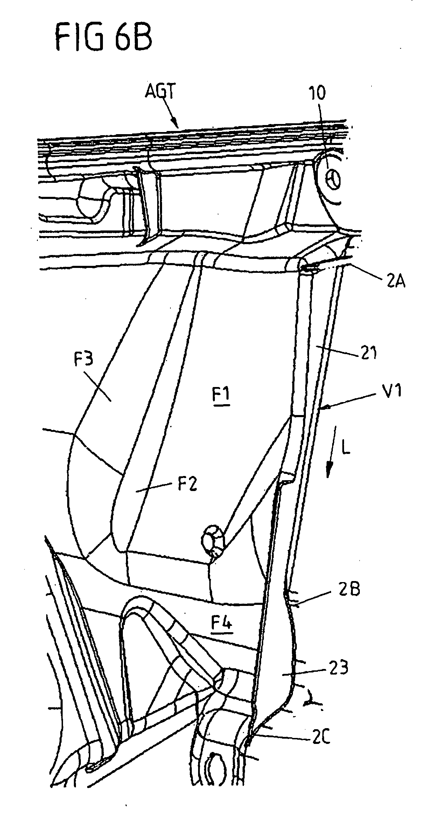

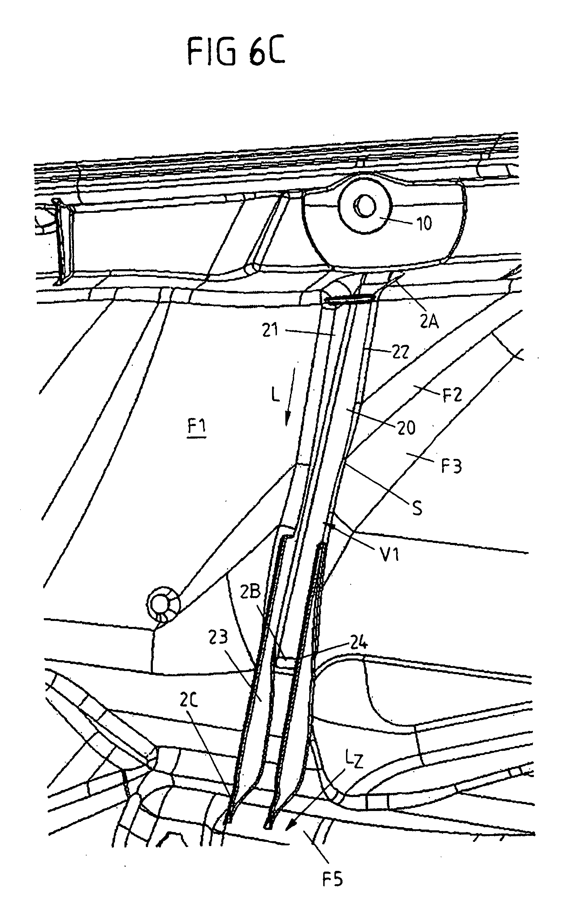

Die Figuren 2A, 2B und 2C zeigen dabei vergrößerte, perspektivische Ansichten der ersten Seitenfläche A1 des Aggregateträgers AGT mit der reliefartig und erhaben vorstehend verlaufenden Versteifungsstruktur V1, während in den Figuren 3, 4 und 5 Schnittansichten entlang der in der Figur 2A eingezeichneten Schnittlinien III, IV und V dargestellt sind. Die Figuren 6A, 6B und 6C wiederum zeigen die zweite Seitenfläche A2 des Aggregateträgers AGT, auf der die Versteifungsstruktur V1 zunächst in Form einer Sicke S und im weiteren Verlauf entlang ihrer Längserstreckungsrichtung L in Form der beiden zueinander parallelen, an der zweiten Seitenfläche A2 vorstehender Versteifungsrippen 23, 24 gebildet ist.

Wie bereits erläutert, erstreckt sich die Versteifungsstruktur V1 ausgehend von einem Randbereich des Aggregateträgers AGT mit einer Befestigungsstelle B entlang der Längserstreckungsrichtung L in Richtung auf eine zentrale Lagerfläche L_{z}. Die Befestigungsstelle B ist dabei vorliegend in Form eines Befestigungsdoms 1 ausgebildet, der eine Bohrung 10 zur Fixierung des Aggregateträgers AGT an einer Türinnenhaut aufweist. An einer im Wesentlichen senkrecht zu der Trägerebene an der ersten Seitenfläche A1 vorspringenden Domwandung 11 beginnt hierbei ein erster Abschnitt der Versteifungsstruktur V1, der sich ausgehend von einem Abschnittsende 2A an dieser Domwandung 11 an der ersten Seitenfläche A1 über die drei Flächensegmente F1, F2 und F3 hinweg zu einem Abschnittsende 2B im Bereich des weiteren Flächensegments F4 keilförmig erstreckt. Die Versteifungsstruktur V1 bildet somit an der ersten Seitenfläche A1 eine rampenartig verlaufende Fläche bzw. Basis 20 aus, die über zwei hierzu im Wesentlichen senkrecht verlaufende und parallel zueinander ausgerichtete Seitenwandungen 21, 22 mit den Flächensegmenten F1 bis F3 verbunden ist. Über die sich entlang der Längserstreckungsrichtung L der Versteifungsstruktur V1 auf der ersten Seitenfläche A1 verjüngenden Seitenwandungen 21, 22 steht somit die Versteifungsstruktur V1 und insbesondere ihre Basis 20 erhaben hervor und verläuft somit hervorstehend an der ersten Seitenfläche A1, so dass sie den Aggregateträger AGT im Bereich der Flächensegmente F1 bis F3 versteift.

In dem Maße, in dem die Ausdehnung der Versteifungsstruktur V1 auf der ersten Seitenfläche A1 im Verlauf ihrer Längserstreckungsrichtung L abnimmt, nimmt auch die Ausdehnung der Versteifungsstruktur V1 auf der gegenüberliegenden zweiten Seitenfläche A2 ab. Dementsprechend liegt die Sicke S im Bereich des Abschnittsendes 2A an dem Befestigungsdom 1 mit einer Tiefe h₁, vor, die der Höhe h₁, entspricht, mit der die Versteifungsstruktur V1 auf der ersten Seitenfläche A1 im Bereich des Befestigungsdoms 1 von dem Flächensegment F1 hervorsteht.

Um im Bereich des weiteren Abschnittsendes 2B der Versteifungsstruktur V1 an der ersten Seitenfläche A1, an dem die Versteifungsstruktur V1 auf der ersten Seitenfläche A1 in das Flächensegment F4 mündet, keine unerwünschte Soll-Biegestelle herbeizuführen, sondern auch im Bereich des Flächensegments F4 eine Versteifung des Aggregateträgers AGT zu erreichen, weist die Versteifungsstruktur V1 auf der zweiten Seitenfläche A2 zusätzlich zu der Sicke S zwei sich in Längserstreckungsrichtung L unmittelbar anschließende Versteifungsrippen 23, 24 auf. Die Sicke S der Versteifungsstruktur V1 wird somit mit mindestens einer vorstehenden Versteifungsrippe, hier einem Paar von Versteifungsrippen 23, 24, kombiniert, um eine durchgehende Versteifungsmaßnahme zu erreichen. Die beiden Seitenwandungen 21, 22 der Versteifungsstruktur V1, die auf der zweiten Seitenfläche A2 die tiefer liegenden Wandungen der Sicke S bilden, gehen dementsprechend jeweils in eine Versteifungsrippe 23, 24 über, die im Bereich der Flächensegmente F3 und F4 erhaben an der zweiten Seitenfläche A2 des Aggregateträgers AGT hervorsteht.

Die Versteifungsrippen 23, 24 enden in Erstreckungsrichtung L an einem (dritten) Abschnittsende 2C in einem Flächensegment F5, das an der zweiten Seitenfläche A2 erhaben hervorsteht und Teil der zentralen Lagerfläche L_{z} ist. Dieses Flächensegment F5 befindet sich im Bereich einer Wandung W, die auf der gegenüberliegenden ersten Seitenfläche A1 im Wesentlichen senkrecht zur Trägerebene hervorsteht und die zentrale Lagerfläche L_{z} für die Antriebseinheit des Fensterhebers berandet.

Wie sich aus den Schnittdarstellungen der Figuren 3, 4 und 5 ergibt, bildet die Versteifungsstruktur V1 entlang ihrer Längserstreckungsrichtung L unterschiedlich stark an beiden Seitenflächen A1, A2 hervorstehende Abschnitte zur Versteifung des Aggregateträgers AGT im Bereich der zueinander versetzten und entlang der Längserstreckungsrichtung L hintereinander angeordneten bzw. aufeinanderfolgenden Flächensegmente F1 bis F4 aus. In einem ersten Abschnitt steht die Versteifungsstruktur V1 entsprechend der Figur 3 nur an der ersten Seitenfläche A1 erhaben hervor und stellt sich auf der gegenüberliegenden, zweiten Seitenfläche A2 ausschließlich als kanalförmige Vertiefung bzw. Sicke S dar. Im weiteren Verlauf der Längserstreckungsrichtung L - hier im Bereich des Flächensegments F3, das, jeweils bezogen auf die Trägerebene, an der ersten Seitenfläche A1 tiefer als die beiden Flächensegmente F1 und F2 und an der zweiten Seitenfläche höher als die beiden Flächensegmente F1 und F2 liegt - bildet die Versteifungsstruktur V1 an der zweiten Seitenfläche A2 zusätzlich erhaben hervorstehende Abschnitte in Form der Versteifungsrippen 23, 24 aus. Die Versteifungsrippen 23, 24 stehen zur zusätzlichen Versteifung an der zweiten Seitenfläche A2 hervor, um die durch die abnehmende Tiefe der Sicke S verringerte Versteifung auszugleichen. Dies ist maßgeblich in der Schnittdarstellung der Figur 4 gezeigt. In einem sich daran in Längserstreckungsrichtung L weiterhin abschließenden Abschnitt der Versteifungsstruktur V1 erstreckt sich diese nur noch auf der zweiten Seitenfläche A2 und zwar in Form der fortgeführten, hervorstehenden Versteifungsrippen 23, 24, wie dies insbesondere in der Figur 5 dargestellt ist. Über diese Versteifungsrippen 23, 24 wird somit das Flächensegment F4 versteift, in das der an der ersten Seitenfläche A1 hervorstehende Abschnitt der Versteifungsstruktur V1 mündet.

Vorliegend ändert sich die Ausdehnung der Versteifungsstruktur V1 quer zur Trägerebene (xz-Ebene) und entlang der Längserstreckungsrichtung L an beiden Seitenflächen A1, A2 in übereinstimmendem Maße, so dass entlang der Längserstreckungsrichtung L eine Ausdehnung der Versteifungsstruktur V1 quer zur Trägerebene (xz-Ebene) an der einen Seitenfläche A1 in dem Maße abnimmt, wie auch die Ausdehnung der Versteifungsstruktur V1 quer zur Trägerebene (xz-Ebene) an der anderen Seitenfläche A2 zunimmt. So weist die Versteifungsstruktur V1 vorliegend entlang ihrer Längserstreckungsrichtung L eine konstant bleibende Gesamthöhe H im Wesentlichen senkrecht zur Trägerebene auf und ist so ausgebildet, dass sie entlang ihrer Längserstreckungsrichtung L in unterschiedlich starkem Maße von den beiden Seitenflächen A1, A2 hervorsteht. Hierdurch wird eine im Wesentlichen konstante versteifende Wirkung entlang der Längserstreckungsrichtung L der Versteifungsstruktur erzielt und eine abnehmende Ausdehnung quer zur Trägerebene (xz-Ebene) an der einen Seitenfläche A1 durch eine zunehmende Ausdehnung quer zur Trägerebene (xz-Ebene) an der anderen Seitenfläche A2 kompensiert.

Auf diese Weise wird über eine längserstreckte Versteifungsstruktur V1 eine durchgehende Versteifung an dem Aggregateträger AGT auch über mehrere entlang der Längserstreckungsrichtung L der Versteifungsstruktur V1 aufeinanderfolgende Flächensegmente F1 bis F5 erreicht, die quer zu der von dem Aggregateträger AGT aufgespannten Trägerebene zueinander versetzt sind und sich somit entlang unterschiedlicher imaginärer Ebenen oder Niveaus bezogen auf die Trägerebene erstrecken. Die Versteifungsstruktur V1 stellt sich dabei auf einer Seitenfläche A2 als eine Kombination aus einer Sicke S und mindestens einer Versteifungsrippe 23, 24 dar, um eine durchgehende Versteifungsmaßnahme am Ebenenwechsel zu erreichen.

In einer Weiterbildung ist es auch möglich, dass sich - alternativ oder ergänzend zu einer Vergrößerung der Versteifungsstruktur V1 auf der zweiten Seitenfläche A2 quer zur Trägerebene - die Abmessungen und damit die Ausdehnung der Versteifungsstruktur V1 quer zu (Längs-)Erstreckungsrichtung L und entlang der Trägerebene vergrößern, wenn die Ausdehnung der Versteifungsstruktur V1 auf der anderen, ersten Seitenfläche A1 abnimmt bzw. abnehmen muss. Hierbei ist folglich beispielsweise die Breite der Verstärkungsrippen 23, 24 auf der zweiten Seitenfläche A2 vergrößert, wenn sich die Höhe des auf der ersten Seitenfläche A1 vorstehenden Abschnitts der Versteifungsstruktur V1 verringert. Dabei erfolgt auf der einen, zweiten Seitenfläche A2 eine Vergrößerung der Breite der Verstärkungsrippen 23, 24 (und damit eine Vergrößerung der Ausdehnung der Versteifungsstruktur V1 quer zur Längserstreckungsrichtung L) tendenziell in dem Maße, wie die Ausdehnung des auf der anderen, ersten Seitenfläche A1 erhaben vorstehenden Abschnitts der Versteifungsstruktur V1 quer zur Trägerebene abnimmt, um eine im Wesentlichen konstante versteifende Wirkung der Versteifungsstruktur V1 entlang ihrer Längserstreckungsrichtung L zu erzielen. Eine abnehmende Ausdehnung quer zur Trägerebene (xz-Ebene) an der einen Seitenfläche A1 wird somit durch eine zunehmende Ausdehnung quer zur Erstreckungsrichtung L an der anderen Seitenfläche A2 kompensiert.

### Bezugszeichenliste

- 1: Befestigungsdom
- 10: Bohrung
- 11: Domwandung
- 20: Basis
- 21: Seitenwandung
- 22: Seitenwandung
- 23, 24: Versteifungsrippe
- 2A, 2B, 2C: Abschnittsende
- AGT: Aggregateträger (Trägerbauteil)
- B: Befestigungsstelle
- D: Dichtung
- F1, F2, F3, F4,: Flächensegment
- F5:
- H: Gesamthöhe
- h₁, h₂, h₃: Höhe
- L: Längserstreckungsrichtung
- L₁, L₂, L₃, L₄: Lagerfläche
- L_{Z}: (zentrale) Lagerfläche
- S: Sicke
- V1, V2, V3, V4,: Versteifungsstruktur
- V5:
- W: Wandung

## Patentansprüche

1. Trägerbauteil (AGT) für ein Kraftfahrzeug, insbesondere für eine Kraftfahrzeugtür, das eine Trägerebene (xz-Ebene) aufspannt und zwei einander gegenüberliegende Seitenflächen (A1, A2) zur Anordnung von Funktionskomponenten eines Kraftfahrzeugfensterhebers definiert, wobei das Trägerbauteil (AGT) wenigstens eine Versteifungsstruktur (V1 - V5) zur Versteifung des Trägerbauteils (AGT) aufweist, die sich an beiden Seitenflächen (A1, A2) entlang der Trägerebene (xz-Ebene) und entlang einer Erstreckungsrichtung (L) erstreckt, wobei das Trägerbauteil (AGT) mindestens zwei Flächensegmente (F1, F3; F2, F3; F2, F4; F3, F4) ausbildet, die an beiden Seitenflächen (A1, A2) in der Erstreckungsrichtung (L) entlang der Trägerebene (xz-Ebene) angeordnet sind, und die Versteifungsstruktur (V1) derart ausgebildet ist, dass sie an der einen Seitenfläche (A1) gegenüber beiden Flächensegmenten (F1, F3; F2, F3; F2, F4; F3, F4) quer zur Trägerebene (xz-Ebene) hervorstehend verläuft, **dadurch gekennzeichnet, dass** die Versteifungsstruktur (V1) ferner derart ausgebildet ist, dass sie an der anderen Seitenfläche (A2) gegenüber einem Flächensegment (F1; F2; F3) der beiden Flächensegmente zurückgesetzt und gegenüber dem anderem Flächensegment (F3; F4) der beiden Flächensegmente hervorstehend verläuft.

2. Trägerbauteil nach Anspruch 1, **dadurch gekennzeichnet, dass** sich die Ausdehnung der Versteifungsstruktur (V1) entlang ihrer Erstreckungsrichtung (L) quer zu der von dem Trägerbauteil (AGT) aufgespannten Trägerebene (xz-Ebene) ändert.

3. Trägerbauteil nach Anspruch 2, **dadurch gekennzeichnet, dass** sich die Ausdehnung kontinuierlich entlang der Erstreckungsrichtung (L) ändert.

4. Trägerbauteil nach Anspruch 2 oder 3, **dadurch gekennzeichnet, dass** die Versteifungsstruktur (V1) zumindest in einem Abschnitt rampenartig verläuft.

5. Trägerbauteil nach einem der Ansprüche 2 bis 4, **dadurch gekennzeichnet, dass** sich die Ausdehnung der Versteifungsstruktur (V1) an beiden Seitenflächen (A1, A2) entlang der Erstreckungsrichtung (L) ändert.

6. Trägerbauteil nach Anspruch 5, **dadurch gekennzeichnet, dass** sich die Ausdehnung der Versteifungsstruktur (V1) an einer Seitenfläche (A1) quer zur Trägerebene (xz-Ebene) und an der anderen Seitenfläche (A2) quer zur Trägerebene (xz-Ebene) und/oder quer zur Erstreckungsrichtung (L) ändert.

7. Trägerbauteil nach Anspruch 6, **dadurch gekennzeichnet, dass** sich die Ausdehnung der Versteifungsstruktur (V1) quer zur Trägerebene (xz-Ebene) und entlang der Erstreckungsrichtung (L) an beiden Seitenflächen (A1, A2) in übereinstimmendem Maße ändert, so dass eine Ausdehnung der Versteifungsstruktur (V1) quer zur Trägerebene (xz-Ebene) an der einen Seitenfläche (A1) in dem Maße ab- oder zunimmt wie auch ihre Ausdehnung quer zur Trägerebene (xz-Ebene) an der anderen Seitenfläche (A2) ab- oder zunimmt.

8. Trägerbauteil nach Anspruch 6, **dadurch gekennzeichnet, dass** sich die Ausdehnung der Versteifungsstruktur (V1) an einer Seitenfläche (A1) quer zur Trägerebene (xz-Ebene) und an der anderen Seitenfläche (A2) quer zur Erstreckungsrichtung (L) der Versteifungsstruktur (V1) ändert, so dass eine abnehmende Ausdehnung quer zur Trägerebene (xz-Ebene) an der einen Seitenfläche (A1) durch eine zunehmende Ausdehnung quer zur Erstreckungsrichtung (L) an der anderen Seitenfläche (A2) kompensiert wird.

9. Trägerbauteil nach einem der vorhergehenden Ansprüche, **dadurch gekennzeichnet, dass** die Versteifungsstruktur (V1) an wenigstens einer Seitenfläche (A2) durch eine Sicke (S) und mindestens eine sich daran in Erstreckungsrichtung (L) anschließende Versteifungsrippe (23, 24) gebildet ist.

10. Trägerbauteil nach einem der vorhergehenden Ansprüche, **dadurch gekennzeichnet, dass** die Versteifungsstruktur (V1) entlang der Erstreckungsrichtung (L) an der einen Seitenfläche (A1) durchgängig reliefartig hervorsteht.

11. Trägerbauteil nach einem der vorhergehenden Ansprüche, **dadurch gekennzeichnet, dass** die beiden Flächensegmente (F1, F3; F2, F4) über ein weiteres, drittes Flächensegment (F2; F3) miteinander verbunden sind, über das sich die Versteifungsstruktur (V1) hinweg erstreckt.

12. Trägerbauteil nach einem der vorhergehenden Ansprüche, **dadurch gekennzeichnet, dass** die beiden Flächensegmente (F1, F3; F2, F3; F2, F4; F3, F4) in der Erstreckungsrichtung (L) hintereinander und zueinander versetzt entlang der Trägerebene (xz-Ebene) angeordnet sind und sich die Versteifungsstruktur (V1) an beiden Seitenflächen (A1, A2) zumindest teilweise über die beiden Flächensegmente (F1, F3; F2, F3; F2, F4; F3, F4) erstreckt.

13. Trägerbauteil nach Anspruch 11 oder 12, **dadurch gekennzeichnet, dass** das dritte Flächensegment (F2; F3) geneigt zu den beiden anderen Flächensegmenten (F1, F3; F2, F4) und/oder der Trägerebene (xz-Ebene) verläuft.

## Claims

1. A support component (AGT) for a motor vehicle, in particular for a motor vehicle door, which defines a support plane (xz-plane) and defines two opposed side faces (A1, A2) for the arrangement of functional components of a motor vehicle window lifter, wherein the support component (AGT) includes at least one reinforcing structure (V1 -V5) for reinforcing the support component (AGT), which on both side faces (A1, A2) extends along the support plane (xz-plane) and along a direction of extension (L), wherein the support component forms at least two surface segments (F1, F3; F2, F3; F2, F4; F3, F4) which on both side faces (A1, A2) are arranged in the direction of extension (L) along the support plane (xz-plane), and the reinforcing structure (V1) is formed such that on the one side face (A1) it extends in a manner protruding with respect to both surface segments (F1, F3; F2, F3; F2, F4; F3, F4) transversely to the support plane (xz-plane), **characterized in that** the reinforcing structure (V1) further is formed such that on the other side face (A2) it extends in a manner set back with respect to a surface segment (F1; F2; F3) of the two surface segments and protruding with respect to the other surface segment (F3; F4) of the two surface segments.

2. The support component according to claim 1, **characterized in that** the expansion of the reinforcing structure (V1) changes along its direction of extension (L) transversely to the support plane (xz-plane) defined by the support component (AGT).

3. The support component according to claim 2, **characterized in that** the expansion changes continuously along the direction of extension (L).

4. The support component according to claim 2 or 3, **characterized in that** the reinforcing structure (V1) extends in a ramp-like manner at least in a portion.

5. The support component according to any of claims 2 to 4, **characterized in that** the expansion of the reinforcing structure (V1) on both side faces (A1, A2) changes along the direction of extension (L).

6. The support component according to claim 5, **characterized in that** the expansion of the reinforcing structure (V1) changes on one side face (A1) transversely to the support plane (xz-plane) and on the other side face (A2) transversely to the support plane (xz-plane) and/or transversely to the direction of extension (L).

7. The support component according to claim 6, **characterized in that** on both side faces (A1, A2) the expansion of the reinforcing structure (V1) transversely to the support plane (xz-plane) and along the direction of extension (L) changes to a corresponding extent, so that an expansion of the reinforcing structure (V1) transversely to the support plane (xz-plane) decreases or increases on the one side face (A1) to the extent in which its expansion transversely to the support plane (xz-plane) also decreases or increases on the other side face (A2).

8. The support component according to claim 6, **characterized in that** the expansion of the reinforcing structure (V1) on one side face (A1) changes transversely to the support plane (xz-plane) and on the other side face (A2) transversely to the direction of extension (L) of the reinforcing structure (V1), so that a decreasing expansion transversely to the support plane (xz-plane) on the one side face (A1) is compensated by an increasing expansion transversely to the direction of extension (L) on the other side face (A2).

9. The support component according to any of the preceding claims, **characterized in that** the reinforcing structure (V1) on at least one side face (A2) is formed by a bead (S) and at least one reinforcing rib (23, 24) adjoining the same in direction of extension (L).

10. The support component according to any of the preceding claims, **characterized in that** along the direction of extension (L) the reinforcing structure (V1) continuously protrudes from the one side face (A1) in a relief-like manner.

11. The support component according to any of the preceding claims, **characterized in that** the two surface segments (F1, F3; F2, F4) are connected with each other via a further, third surface segment (F2; F3), across which the reinforcing structure (V1) extends.

12. The support component according to any of the preceding claims, **characterized in that** the two surface segments (F1, F3; F2, F3; F2, F4; F3, F4) are arranged one behind the other and offset to each other in direction of extension (L) along the support plane (xz-plane) and on both side faces (A1, A2) the reinforcing structure (V1) at least partly extends over the two surface segments (F1, F3; F2, F3; F2, F4; F3, F4).

13. The support component according to claim 11 or 12, **characterized in that** the third surface segment (F2; F3) extends with an inclination to the two other surface segments (F1, F3; F2, F4) and/or the support plane (xz-plane).

## Revendications

1. Elément de support (AGT) destiné à véhicule automobile, en particulier à une portière de véhicule automobile, qui forme un plan de support (plan xz) et qui définit deux surfaces latérales (A1, A2) se faisant face l'une l'autre servant à disposer des composants fonctionnels d'un lève-vitre de véhicule automobile, l'élément de support (AGT) présentant au moins une structure de renforcement (V1 - V5) servant à renforcer l'élément de support (AGT), laquelle s'étend au niveau des deux surfaces latérales (A1, A2) le long du plan de support (plan xz) et le long d'une direction d'extension (L), l'élément de support (AGT) réalisant au moins deux segments de surface (F1, F3 ; F2, F3 ; F2, F4 ; F3, F4), lesquels sont disposés au niveau de deux surfaces latérales (A1, A2) dans la direction d'extension (L) le long du plan de support (plan xz), et la structure de renforcement (V1) étant réalisée de telle manière qu'elle s'étend au niveau de l'une des surfaces latérales (A1) de manière à faire saillie de manière transversale par rapport au plan de support (plan xz) par rapport aux deux segments de surface (F1, F3 ; F2, F3 ; F2, F4 ; F3, F4), **caractérisé en ce que** la structure de renforcement (V1) est réalisée en outre de telle manière qu'elle crée un retrait au niveau de l'autre surface latérale (A2) par rapport à un segment de surface (F1; F2 ; F3) des deux segments de surface et qu'elle s'étend de manière à faire saillie par rapport à l'autre segment de surface (F3 ; F4) des deux segments de surface.

2. Elément de support selon la revendication 1, **caractérisé en ce que** l'allongement de la structure de renforcement (V1) se modifie le long de sa direction d'extension (L) de manière transversale par rapport au plan de support (plan xz) formé par l'élément de support (AGT).

3. Elément de support selon la revendication 2, **caractérisé en ce que** l'allongement se modifie en continu le long de la direction d'extension (L).

4. Elément de support selon la revendication 2 ou 3, **caractérisé en ce que** la structure de renforcement (V1) s'étend au moins à la manière d'une rampe dans une section.

5. Elément de support selon l'une quelconque des revendications 2 à 4, **caractérisé en ce que** l'allongement de la structure de renforcement (V1) se modifie au niveau des deux surfaces latérales (A1, A2) le long de la direction d'extension (L).

6. Elément de support selon la revendication 5, **caractérisé en ce que** l'allongement de la structure de renforcement (V1) se modifie au niveau d'une surface latérale (A1) de manière transversale par rapport au plan de support (plan xz) et au niveau de l'autre surface latérale (A2) de manière transversale par rapport au plan de support (plan xz) et/ou de manière transversale par rapport à la direction d'extension (L).

7. Elément de support selon la revendication 6, **caractérisé en ce que** l'allongement de la structure de renforcement (V1) se modifie de manière transversale par rapport au plan de support (plan xz) et le long de la direction d'extension (L) au niveau des deux surfaces latérales (A1, A2) selon une dimension concordante de sorte qu'un allongement de la structure de renforcement (V1) diminue ou augmente de manière transversale par rapport au plan de support (plan xz) au niveau de l'une des surfaces latérales (A1) selon la dimension tout comme son allongement diminue ou augmente de manière transversale par rapport au plan de support (plan xz) au niveau de l'autre surface latérale (A2).

8. Elément de support selon la revendication 6, **caractérisé en ce que** l'allongement de la structure de renforcement (V1) se modifie au niveau de l'une de surfaces latérales (A1) de manière transversale par rapport au plan de support (plan xz) et au niveau de l'autre surface latérale (A2) de manière transversale par rapport à la direction d'extension (L) de la structure de renforcement (V1) de sorte qu'un allongement diminuant de manière transversale par rapport au plan de support (plan xz) au niveau de l'une des surfaces latérales (A1) est compensé au niveau de l'autre surface latérale (A2) par un allongement augmentant de manière transversale par rapport à la direction d'extension (L).

9. Elément de support selon l'une quelconque des revendications précédentes, **caractérisé en ce que** la structure de renforcement (V1) est formée au niveau au moins d'une surface latérale (A2) par une moulure (S) et au moins une nervure de renforcement (23, 24) s'y raccordant dans la direction d'extension (L).

10. Elément de support selon l'une quelconque des revendications précédentes, **caractérisé en ce que** la structure de renforcement (V1) fait saillie à la manière d'un relief en continu le long de la direction d'extension (L) au niveau de l'une des surfaces latérales (A1).

11. Elément de support selon l'une quelconque des revendications précédentes, **caractérisé en ce que** les deux segments de surface (F1, F3 ; F2, F4) sont reliés l'un à l'autre par l'intermédiaire d'un troisième segment de surface (F2 ; F3) supplémentaire, au-delà duquel la structure de renforcement (V1) s'étend.

12. Elément de support selon l'une quelconque des revendications précédentes, **caractérisé en ce que** les deux segments de surface (F1, F3 ; F2, F3 ; F2, F4 ; F3, F4) sont disposés l'un derrière l'autre dans la direction d'extension (L) et de manière décalée l'un par rapport à l'autre le long du plan de support (plan xz), et **en ce que** la structure de renforcement (V1) s'étend au niveau des deux surfaces latérales (A1, A2) au moins en partie au-dessus des deux segments de surface (F1, F3 ; F2, F3 ; F2, F4; F3, F4).

13. Elément de support selon la revendication 11 ou 12, **caractérisé en ce que** le troisième segment de surface (F2 ; F3) s'étend de manière inclinée par rapport aux deux autres segments de surface (F1, F3 ; F2, F4) et/ou par rapport au plan de support (plan xz).
